# EUROPEAN PATENT APPLICATION

(11) **EP 4 789 831 A1**
(43) Date of publication of application: **12.08.2026**
(21) Application number: 25213029.9
(22) Date of filing: 03.11.2025
(51) Int. Cl.: B28C 5/02, B28C 5/40, B28C 9/04, C04B 18/24, E04F 21/12, E04G 21/04

(54) **MOBILE DEVICE FOR PRODUCING AN INSULATION MATERIAL CONTAINING A PLANT-BASED MATERIAL**

(30) Priority: 10.02.2025 BE 202505074
(71) Applicant: Experts in Healthy Houses NV, 9550 Herzele (BE)
(72) Inventor: HENDRICKX, Mathieu, 9550 Herzele (BE); SEGERS, Axel Aloysius M., 9550 Herzele (BE)
(74) Representative: V.O.

(57) **Abstract**

The invention relates to a mobile device (1) for producing an insulation material comprising a mixture of a plant-based material and a binder. The device comprising: a first container (12) for storing a plant-based material, a second container (22) for storing one or more binder substances, a first production unit (10) configured to create a flow of the plant-based material through a first outlet pipe (11), a second production unit (20) configured to produce a binder by mixing the one or more binder substances with water, and to create a flow of the binder through a second outlet pipe (21). A frame (2) is supporting the containers (12, 22) and the first (10) and second (20) production units and a suspension system is connecting at least two wheels (3) to the frame (2). The first container (12) comprises a transport system (15) to transport the plant-based material to a wall opening (19) in a lateral side of the container (12) for feeding the plant-based material to the first production unit (10) through the wall opening (19).

## Description

### Technical field of the invention

The invention relates to a mobile device for producing an insulating material that contains a plant-based material. In particular, the invention relates to a mobile device for the production of an insulating material consisting of a combination of hemp shives and a binder, for example, a lime binder. The invention also relates to a system comprising the mobile device and a projection lance to project the insulating material.

### Background

A known plant-based insulating material is, for example, hemp-lime, which is an energy-efficient and sustainable insulating material.

Due to the good properties of hemp-lime in terms of thermal, acoustic, and moisture-regulating aspects, the demand for this insulating material is increasing significantly. Moreover, it is also an advantageous material ecologically, being CO2 negative.

Hemp-lime is used in both dry and wet forms. In a dry form, a premix of hemp and lime is prepared and bagged. These bags are opened and poured on-site, for example, poured between two panels of a prefabricated timber frame construction. Dry hemp-lime can also be used as floor insulation, where the hemp-lime bags are manually poured over the floor and compacted.

In addition to dry hemp-lime, wet hemp-lime is also used, also known as hempcrete. Hempcrete consists of a mixture of hemp shives, lime, and water. Additives, such as mineral additives, can also be added to this mixture.

Hempcrete is usually prepared on the construction site using, for example, a forced mixer, and the hempcrete is then manually placed behind a lost formwork.

More recently, a technique has also been used where the hemp-lime mixture is projected with a projection lance instead of being poured.

However, this technique is not yet applied on an industrial scale because the current equipment is too limited to produce the insulation material efficiently and in large volumes. Moreover, the current devices require many work hours and manpower to apply this insulation technique on-site.

Thus, there is a need to improve the devices for producing and projecting a hemp-lime mixture to make the application of the plant-based insulating material economically more viable.

### Summary

An objective of the present invention is to provide a mobile device for efficiently producing and projecting an insulation material that contains a plant-based material, particularly an insulation material consisting of a hemp-lime mixture. The device should allow for the reduction of manpower needed to apply the insulation material and drastically limit the number of transports to the site for material delivery.

The present invention is defined in the appended independent claims. The dependent claims define advantageous embodiments.

A first aspect of the invention relates to a mobile device for producing an insulation material that comprises a mixture of a plant-based material and a binder.

The mobile device comprises a first container for storing a plant-based material, a second container for storing one or more binder substances, a first and a second outlet pipe, and a first production unit connected to the first container to receive plant-based material and configured to create a flow of the plant-based material through the first outlet pipe. The first container comprises a bottom side, two longitudinal sides extending along a longitudinal axis L, and a first and second lateral side transverse to the longitudinal sides. The mobile device further comprises a second production unit connected to the second container to receive the one or more binder substances, and wherein the second production unit is configured to produce a binder by mixing the one or more binder substances with water and to create a flow of the binder through the second outlet pipe. The mobile device also comprises a frame extending along the longitudinal axis, at least two wheels, and a suspension system that connects the at least two wheels to the frame, and wherein at least the first container, the second container, the first production unit, and the second production unit are supported by the frame.
and wherein a wall opening is located in the first or second lateral side of the first container, and wherein the wall opening is connected to the first production unit for feeding the plant-based material to the first production unit through said wall opening, and wherein the first container comprises a transport system configured to transport the plant-based material in the first container to said wall opening.

By placing the first and second production units for creating respective flows of plant-based material and binder on the same mobile frame, the number of transports to the site can be limited.

Indeed, not only can the two production units be transported together to the site, but also the base materials of the insulation, such as hemp shives and lime, are transported in bulk via the first and second containers, which are also mounted on the frame.

In embodiments, the mobile device can be part of a truck or a trailer that can be coupled to a towing vehicle.

The work on the site, and the amount of necessary manpower, is also drastically reduced because, for example, there is no longer a need to move and open bags of hemp shives or bags of lime, as is the case with existing systems. With the containers of the mobile device, the basic elements of the insulation material are brought to the site in bulk.

The volume of the insulation material projected with a projection lance is largely determined by the volume of the plant-based material. The first container containing the plant-based material, such as hemp shives, can have a large capacity so that large volumes of insulation material can be produced on-site with a single delivery by the mobile device. For example, the first container has a capacity equal to or greater than 5 m³, preferably equal to or greater than 10 m³, more preferably equal to or greater than 50 m³.

The capacity of the second container containing the binder substances is determined in relation to the capacity of the first container. For example, the second container has a capacity equal to or greater than 0.5 m³, preferably equal to or greater than 1 m³, more preferably equal to or greater than 5 m³.

The plant-based material is usually a woody component of a plant, preferably wherein the plant-based material are hemp shives, and one of the one or more binder substances is usually lime, clay, or cement, or a combination thereof.

In embodiments, the transport system of the first container for transporting the plant-based material from the first container to the first production unit may, for example, comprise a conveyor belt or a conveyer screw.

Optionally or additionally, the conveyor belt or the conveyer screw is located on the bottom side of the first container.

Optionally, the longitudinal axis L may be oriented from a front side to a back side of the mobile device.

Optionally, the lateral side of the first container that is comprising the wall opening is located at the back side of the mobile device.

Optionally or additionally, the bottom side of the first container is resting on the frame.

Optionally, at least a bottom portion of the first container has a conical shape. Alternatively, the first container has a shape of a cuboid.

Optionally, the first container comprises an anti-bridging system configured for limiting bridge formation in the first container when the mobile device is in operation and the first container is filled with the plant-based material. In embodiments, the anti-bridging system comprises rotatable scraping elements or rotatable paddles configured for limiting bridge formation in the first container. In other embodiments, the anti-bridging system may comprise one or more vibration devices for vibrating the first container. In further embodiments, the rotating paddles or scraping elements, may be combined with the one or more vibration devices to form an anti-bridging system.

Optionally or additionally, the first production unit may comprise a dosing element to dose the supply of plant-based material from the first container to the first outlet pipe, and further comprise a blower configured to blow air through the first outlet pipe to thereby create the flow of plant-based material through the first outlet pipe.

Optionally, the first production unit comprises a collection basin to collect the plant-based material delivered from the first container through said wall opening, and wherein the dosing element is placed between the collection basin and the first outlet pipe.

Optionally, the first production unit further comprises a gate, placed between the dosing element and the first outlet pipe, and wherein the gate is configured to prevent air from the blower from entering the dosing element.

Optionally, the dosing element of the first production unit may, for example, comprise an auger screw, preferably wherein the auger screw of the dosing element is configured to transport plant-based material from the collection basin towards the gate.

In embodiments, the second production unit may comprise a mixing device configured to form the binder by mixing the one or more binder substances with water. The second production unit may further comprise a pump configured to pump away the formed binder and create the flow of the binder through the second pipe. The pump may, for example, be a screw pump.

Optionally or additionally, the second production unit may further comprise a binder dosing device 39 configured to dose the supply of binder substance and to transport binder substance from a binder substance inlet 26 towards the mixing device 23.

Optionally, the second production unit may comprise a binder collection basin placed between the mixing device and the pump to collect the binder produced by the mixing device.

Generally, the mixing device comprises a first inlet for receiving water, a second inlet for receiving the one or more binder substances, and a mixing device outlet for discharging the formed binder.

Optionally, the mobile device may comprise a generator to supply electricity to the first and second production units, and wherein the generator is mounted on the frame.

Optionally, the mobile device may also comprise a boiler to heat the water supplied to the mixing device. In embodiments, the boiler may be configured to heat the water by heat recovery from the generator.

Optionally or additionally, the mobile device may further comprise an air compressor mounted on the frame and a third outlet pipe for supplying compressed air.

Optionally or additionally, the mobile device further comprises a control system to control the first and second production unit.

By providing a common control system for both the first and second production units, the ratio of the flow of hemp shives to the flow of binder can be optimally monitored.

Optionally or additionally, the control system may be configured to monitor the flow rate of the plant-based material flowing through the first outlet pipe and the flow rate of the binder flowing through the second outlet pipe, so that a predetermined ratio between plant-based material and binder is maintained during the projection of the insulation material.

A second aspect of the invention relates to a system that, in addition to the mobile device, also comprises a projection lance for projecting the insulation material that comprises a mixture of the plant-based material and the binder. The projection lance is connectable to the mobile device and is configured for mixing the flow of the plant-based material with the flow of the binder and for projecting the mixed flows of plant-based material and binder.

Additionally, the projection lance may comprise a nozzle that has a first inlet and a second inlet which can be respectively connected to the first outlet pipe and the second outlet pipe of the mobile device, so that the nozzle receives both the flow of the plant-based material and the flow of the binder. Preferably wherein the nozzle of the projection lance has a third inlet which can be connected to the third outlet pipe of the mobile device supplying compressed air.

In embodiments, the projection lance comprises a first flexible hose for connecting the first outlet pipe to the first inlet of the nozzle and a second flexible hose for connecting the second outlet pipe to the second inlet of the nozzle.

Optionally, a third flexible hose for connecting the third outlet pipe supplying compressed air to the third inlet of the nozzle may be provided so that compressed air can flow through the nozzle together with the mixed flow of plant-based material and binder.

Advantageously, with the system of the present invention, a high flow rate of insulation material can be projected. With the system according to the present invention, a flow rate of insulation material of 1 m³/hour or more, preferably 5 m³/hour or more, more preferably 10 m³/hour or more, can be projected.

The present invention also relates to a truck comprising a mobile device according as discussed above and wherein the frame, the at least two wheels, and the suspension system are part of a chassis of the truck.

### Short description of the drawings

The invention will be further explained with reference to drawings using examples of embodiments. The drawings are schematic and only show examples. In the drawings, corresponding elements are indicated with corresponding reference numerals.
Fig.1 is a schematic representation of a system comprising a mobile device for producing insulation material and a projection lance for projecting the insulation material according to the present invention;
Fig.2 is a schematic representation of an example of a first embodiment of the mobile device according to the present invention, wherein the mobile device is part of a truck;
Fig.3 is a schematic representation of an example of a second embodiment of the mobile device according to the present invention, wherein the mobile device is part of a trailer that can be coupled to a towing vehicle;
Fig.4 is a schematic representation of an example of an embodiment of the first production unit connected to the first container to receive plant-based material and to create a flow of plant-based material through the first outlet pipe of the mobile device;
Fig.5a, Fig.5b, and Fig.5c are schematic representations of three examples of embodiments of the second production unit connected to the second container and configured to create a flow of binder through the second outlet pipe;
Fig.6a is a cross-sectional view of an embodiment of a container containing plant-based material, and wherein a transport system having a conveyer belt is located on a bottom side of the first container for feeding the plant-based material to the first production unit through a wall opening in a lateral side of the container;
Fig.6b is a cross-sectional view of second embodiment of a container containing plant-based material, similar to the container shown on Fig.6a, but wherein rotatable scraping elements, in this embodiment in the form of rotatable paddles, are provided for prohibiting bridge formation within the container,
Fig.7 is a cross-sectional view of third embodiment of a container containing plant-based material, wherein the container has a cuboid shape and wherein a conveyer belt is located on a bottom side of the container for feeding the plant-based material to the first production unit through a wall opening in a lateral side of the first container, the container belt has a width *W_{B}* that covers a large part of the width *W_{C}* of the container.

### Detailed description

### System for producing and projecting insulation material

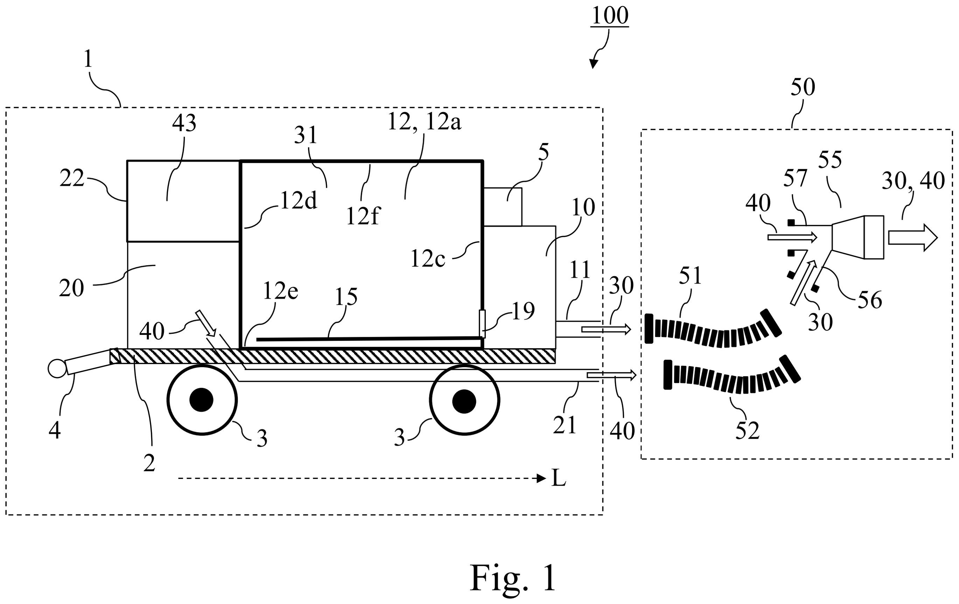

Referring to Fig.1, a schematic representation is shown of an example embodiment of a system 100 according to the present invention for producing and projecting an insulation material.

The system 100, as schematically shown in Fig.1, comprises a mobile device 1 for producing the insulation material and a projection lance 50 connectable to the mobile device 1. The mobile device 1 has a first 11 and second 21 outlet pipe from which a flow of the plant-based material 30 and a flow of the binder 40 can respectively flow. The projection lance 50 is configured for mixing the flow 30 of the plant-based material with the flow 40 of the binder and for projecting the mixed flows of plant-based material and binder.

Projecting the insulation material with the projection lance refers to spraying, usually under pressure, the insulation material. For example, projecting the insulation material onto a subfloor to apply an insulation layer. In this way, an insulation screed is obtained.

The insulation material comprises a mixture of a plant-based material and a binder.

The plant-based material can be a woody component of a plant, for example, the plant-based material can consist of hemp shives. Hemp shives are a by-product of hemp plant cultivation and are obtained by separating hemp straw into hemp fibers and hemp shives. However, the present invention is not limited to hemp shives, and other plant-based materials, particularly woody components of plant-based materials, can be used as insulation material.

The binder consists of a mixture of water with one or more binder substances. Examples of binder substances are lime, clay, cement, or a combination thereof.

In embodiments, as schematically shown in Fig.1, the projection lance 50 comprises a nozzle 55 that has a first inlet 56 and a second inlet 57 which can be connected to the first outlet pipe 11 and the second outlet pipe 21 of the mobile device 1, respectively, so that the nozzle 55 receives both the flow of the plant-based material 30 and the flow of the binder 40.

In embodiments, the projection lance 50 further comprises a first flexible hose 51 for connecting the first outlet pipe 11 to the first inlet 56 of the nozzle 55 and a second flexible hose 52 for connecting the second outlet pipe 21 to the second inlet 57 of the nozzle 55. The flexible hoses can be, for example, rubber hoses.

In embodiments, the first flexible hose 51, i.e. the hose through which the plant-based material is blown, may have a diameter between 20 mm and 500 mm, preferably between 60 mm and 300 mm, more preferably between 60 mm and 150 mm.

The mobile device 1 is thus a device that can be moved and, for example, can be transported to a construction site. To this end, the mobile device 1 comprises a frame 2, at least two wheels 3, and a suspension system that connects the at least two wheels to the frame.

The frame 2 can be made, for example, of steel or aluminum. In embodiments, the frame can have a rectangular shape. The frame 2 can extend, for example, along a longitudinal axis L, which is an axis associate to the frame and/or to the mobile device. The frame may extend along the longitudinal axis L from a front side to a back side of the frame, or from a front side to a back side of the mobile device.

The front and backside of the frame and the front and back side of the mobile device is defined in relation to the forward moving direction of the mobile device. For example if the moving device is a truck then the backside of the mobile device is the backside of the truck..

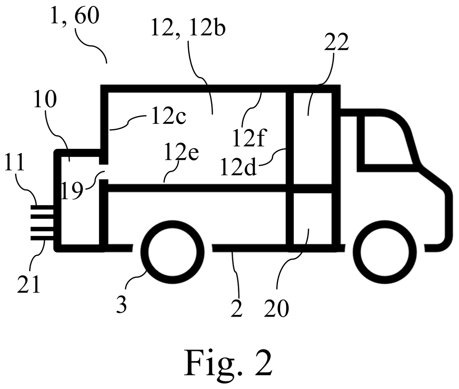

In embodiments, the frame 2, the wheels 3, and the suspension of the mobile device 10 can be part of a chassis of a truck 60, as schematically depicted in Fig.2.

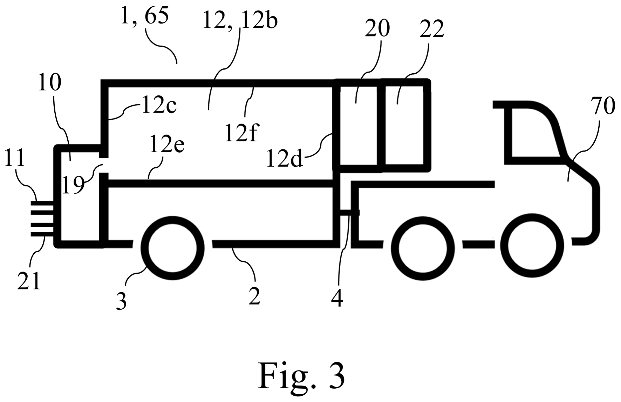

In other embodiments, the frame 2, the wheels 3, and the suspension can be part of a chassis of a trailer 65, as schematically depicted in Fig.3. In these embodiments, the mobile device comprises a coupling element 4 attached to the front side of the frame 2 and configured to attach the mobile device 1 to a towing vehicle 70 so that the mobile device 1 can be transported.

The mobile device 1 further comprises a first container 12 for storing the plant-based material 31, a second container 22 for storing one or more binder substances 43, a first production unit 10, and a second production unit 20.

The first container 12 has, for example, a capacity equal to or greater than 5 m³, preferably equal to or greater than 10 m³, more preferably equal to or greater than 50 m³. In this way, large volumes of plant-based material can be brought to a construction site with the mobile device, and large volumes of insulation material can be projected with a single delivery by the mobile device 1.

The volume of the second container is generally smaller than the volume of the first container and is determined in relation to the amount of binder substances needed for a certain volume of plant-based material. The second container 22 has, for example, a capacity equal to or greater than 0.5 m³, preferably equal to or greater than 1 m³, more preferably equal to or greater than 5 m³.

The first production unit 10 is connected to the first container 12 to receive plant-based material 31 and is configured to create a flow of the plant-based material 30 through the first outlet pipe 11 of the mobile device 1.

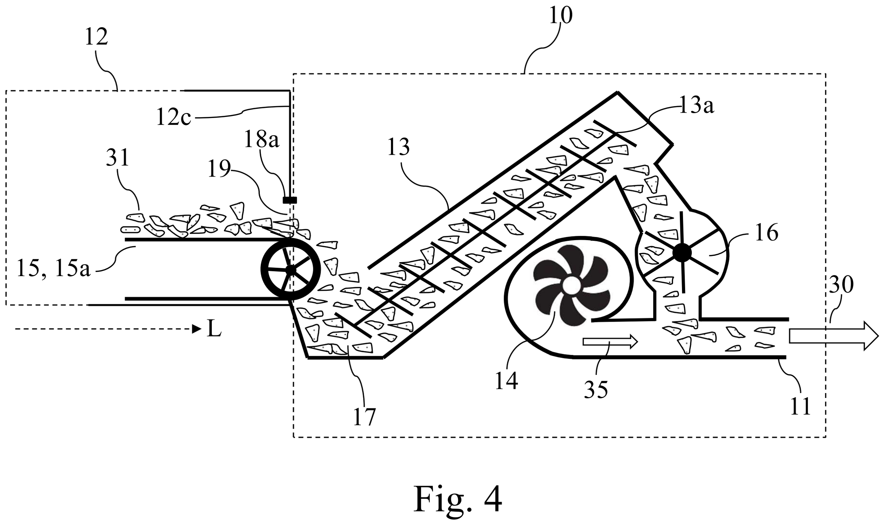

The first container comprises a transport system 15 to transport the plant-based material 31 from the first container 12 to the first production unit 10, as schematically illustrated on Fig.1 and Fig.4. The transport system 15 may comprise, for example, a conveyor belt 15a or a conveyer screw. In embodiments, the conveyor belt 15a or the conveyer screw is located on the bottom side of the first container. The first container has a wall opening 19, and the transport system 15 is configured to transport the plant-based material to the wall opening 19 in the first container 12, and wherein the wall opening 19 is connected to the first production unit 10 so that the plant-based material can be fed through the wall opening to the first production unit 10.

The first container 12 generally comprises a bottom side 12e that generally rests on the frame 2, two longitudinal sides 12a, 12b extending along the longitudinal axis L, and a first 12c and a second 12d lateral side transverse to the longitudinal sides. The top 12f of the first container, opposite the bottom side, can initially be open to bring the plant-based material in bulk into the first container. After filling the first container with the plant-based material, the top can be closed with, for example, a tarpaulin.

The two longitudinal sides 12a, 12b are opposing each other and the two lateral sides 12c,12d are opposing each other, and together with the bottom side form the first container 12.

In embodiments, the wall opening 19 in the first container is located in one of the lateral sides of the container, for example, in a lateral side located at the back of the mobile device.

In embodiments the lateral sides may be perpendicular to the longitudinal sides.

The conveyor belt 15a or the conveyer screw typically extends along the longitudinal axis L from the first lateral side to the second lateral side of the container and is configured to transport the plant-based material 31 to the wall opening 19 in in one of the lateral sides of the first container 12.

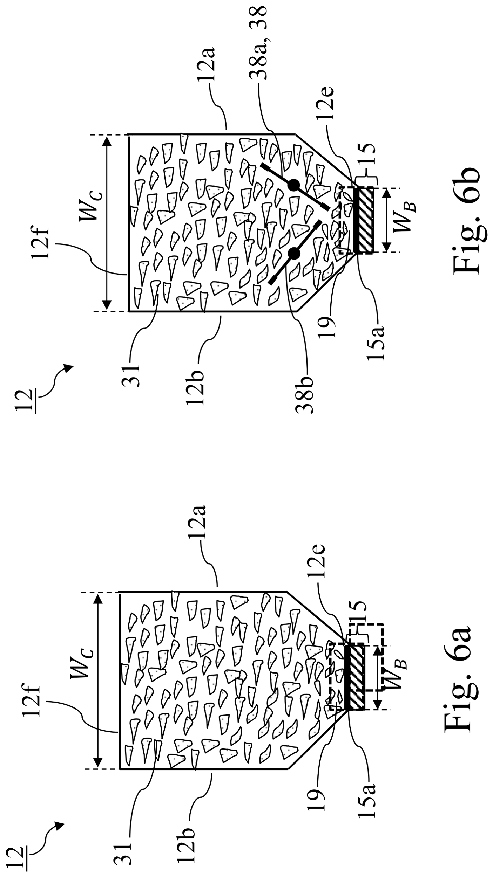

The width of the conveyer belt *W_{B}* will depend on the geometry of the first container. For example, in embodiments as schematically illustrated on Fig.6a and Fig.6b, at least a bottom portion of the first container 12 has a conical shape, and the width *W_{B}* of the conveyer belt 15a is limited by this conical geometry.

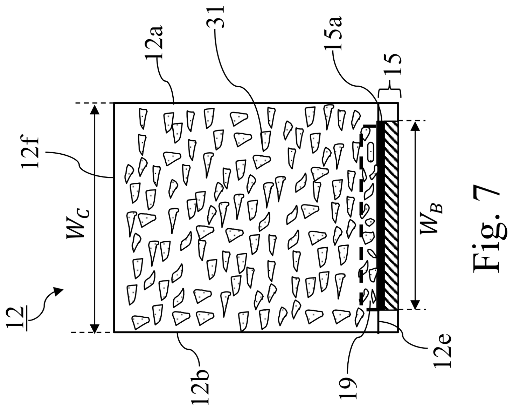

In other embodiments, wherein the first container 12 has a cuboid shape, as illustrated on Fig.7, the width *W_{B}* of the conveyer belt 15a may be larger and be close to the width *W_{C}* of the first container, and for example 0.6 x *W_{C}* ≤ *W_{B}* ≤ *W_{C},* preferably 0.7 x *W_{C}* ≤ *W_{B}* /≤ *W_{C},* more preferably 0.8 x *W_{C}* ≤ *W_{B}* /≤ *W_{C}.* The width of the first container is a lateral width measured in a direction perpendicular to the longitudinal direction L.

In embodiments, the first container 12 may also comprise an anti-bridging system 38 for limiting bridge formation when the container is filled with plant-based material. Indeed depending, on the geometry of the first container, the plant-based material may stick to the walls of the container and the plant-based material may not continuously fall down to the transport system.

In embodiments, as schematically illustrated on Fig.6b, one or more scraping elements or rotatable paddles 38a, 38b configured to push plant-based material located on the walls of the container towards the conveyor belt, are provided and are forming an anti-bridging system 38. Mainly when the first container is almost empty, it is useful to activate these rotatable scraping elements or paddles to completely empty the container and prevent bridging. In embodiments the scraping elements or paddles are rotatable around a rotation axis. The rotation axis may be parallel with the longitudinal axis L and a plurality of scraping elements are paddles spaced from each other may be coupled to the rotation axis such that along the entire length of the container bridge formation is limited.

In other embodiments, the anti-bridging system may comprise one or more vibration devices for generating vibrations within the first container. In further embodiments, the vibration devices may be combined with rotatable scraping elements or rotatable paddles.

The second production unit 20 is connected to the second container 22 to receive the one or more binder substances 43 and is configured to produce a binder 41 by mixing the one or more binder substances 43 with water 42, and to create a flow of the binder 40 through the second outlet pipe 21 of the mobile device 1.

With the system 100 according to the present invention, projecting insulation material can be performed not only efficiently but also quickly. The first 10 and second 20 production units are, for example, configured so that the system can generate a flow rate of insulation material of 1 m³/hour or more, preferably 5 m³/hour or more, more preferably 10 m³/hour or more. This flow rate is the flow rate of insulation material projected through the nozzle 55 of the projection lance 50.

The frame 2 of the mobile device 1 forms a mechanical support structure for both the first 12 and second 22 containers and for the first 10 and second 20 production units.

The first outlet pipe 11 and the second outlet pipe 21 can also be attached to the frame 2.

In embodiments, as schematically shown in Fig.1, the first and/or second outlet pipe or at least a part of the first and/or second outlet pipe can be mounted at the bottom of the frame 2.

The first 11 and second 21 outlet pipes can each comprise a coupling element to make a connection with a first 51 and second 52 flexible hose of the projection lance 50, respectively.

In the embodiments as schematically shown in Fig.1, Fig.2, and Fig.3, the first 11 and/or second 21 outlet pipes each have an end portion that ends at the back of the frame 2. In other embodiments, the first outlet pipe and/or the second outlet pipe may have an end portion that ends at a lateral side of the frame.

In embodiments, the mobile device 1 further comprises a control system 5 to control the first 10 and second 20 production units.

In embodiments, the control system 5 is configured to monitor the flow rate of the plant-based material flowing through the first pipe and the flow rate of the binder flowing through the second pipe so that a predetermined ratio between plant-based material and binder is maintained during the projection of the insulation material.

Generally, electricity may be taken at the site to power the mobile device 1. However, in some embodiments, the mobile device 1 optionally may comprise a generator to supply electricity to for instance the first and second production units. In these embodiments comprising a generator, the generator can be mounted on the frame.

In further embodiments, the mobile device 1 can optionally comprise a boiler 29 to heat the water used to produce the binder. The use of hot water promotes the formation of a homogeneous binder mass. In embodiments, the boiler can be configured to heat the water by heat recovery from the generator. The hot water has, for example, a temperature equal to or higher than 17°, preferably equal to or higher than 20°, more preferably equal to or higher than 25°.

In embodiments, the mobile device 1 can also comprise additional containers. For example, the mobile device can comprise a third container for storing one or more additives that can be used together with the one or more binder substances from the first container to produce the binder with the second production unit.

In embodiments, the mobile device can also comprise an air compressor mounted on the frame 2 and a third outlet pipe may be provided through which compressed air can be pumped.

This third outlet pipe supplying compressed air can further be connected to a third flexible hose. The nozzle of the projection lance can, for example, have a third inlet to attach a third flexible hose with compressed air so that compressed air can flow through the nozzle, together with the mixed flow of plant-based material and binder.

The first production unit, the second production unit, and the control system are further discussed in more detail below.

### First production unit

Referring to Fig.4, a schematic representation is shown of an example embodiment of the first production unit 10. The first production unit 10 is connected to the first container 12 to receive plant-based material 31 and configured to create a flow 30 of plant-based material through the first outlet pipe 11 of the mobile device 1.

In embodiments, as shown in Fig.4, the first production unit comprises a collection basin 17 to collect the plant-based material 31 delivered from the first container 12. The plant-based material 31 is, for example, delivered from the first container 12 by a conveyor belt 15, particularly a conveyor belt mounted on the bottom of the first container.

The first production unit 10 further comprises a dosing element 13 to dose the supply of plant-based material from the first container 12 to the first pipe 11. The dosing element 13 may, for example, comprise an auger screw 13a.

In embodiments, the dosing element 13 can be placed between the first container 12 and the first outlet pipe 11, or more precisely between the collection basin 17 and the first outlet pipe 11.

As schematically shown in Fig.4, the first production unit 10 comprises a blower 14 configured to blow air through the first outlet pipe 11 to thereby create the flow of plant-based material 30 through the first pipe. The blower 14 is for example a fan.

The first production unit 10 generally also comprises a gate 16 placed between the dosing element 13 and the first outlet pipe 11, and wherein the gate 16 is configured such that air from the blower 14 is only blown through the first pipe 11 and not through the dosing element 13.

The gate 16 may, for example, consist of a rotor with a number of compartments as schematically illustrated in Fig.4. Each compartment can be filled with plant-based material coming from the dosing element when the compartment is positioned in a first position, and each compartment can be emptied and the plant-based material discharged to the first outlet pipe when the compartment is positioned in a second position, for example, where the second position corresponds to a rotation relative to the first position between 60° and 180°. The rotor can be provided with a seal to ensure that no air from the blower enters the dosing element.

In embodiments, as schematically illustrated on Fig.4, the auger screw 13a of the dosing element 13 is configured to transport plant-based material from the collection basin 17 towards the gate 16.

In embodiments, the first production unit is configured to generate a flow rate of plant-based material of 1 m3/hour or more, preferably 5 m3/hour or more, more preferably 10 m3/hour or more, through the first outlet pipe 11.

### Second production unit

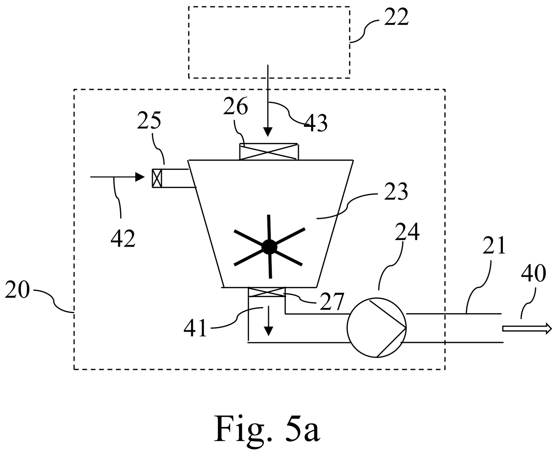

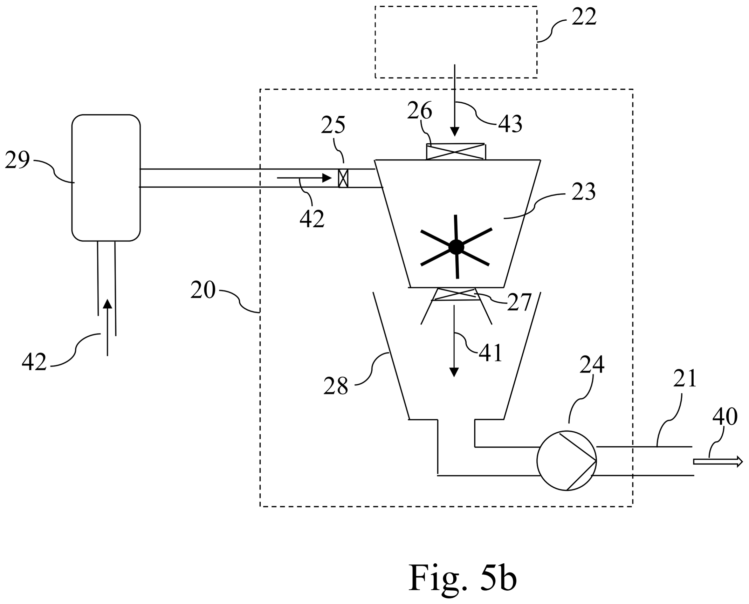

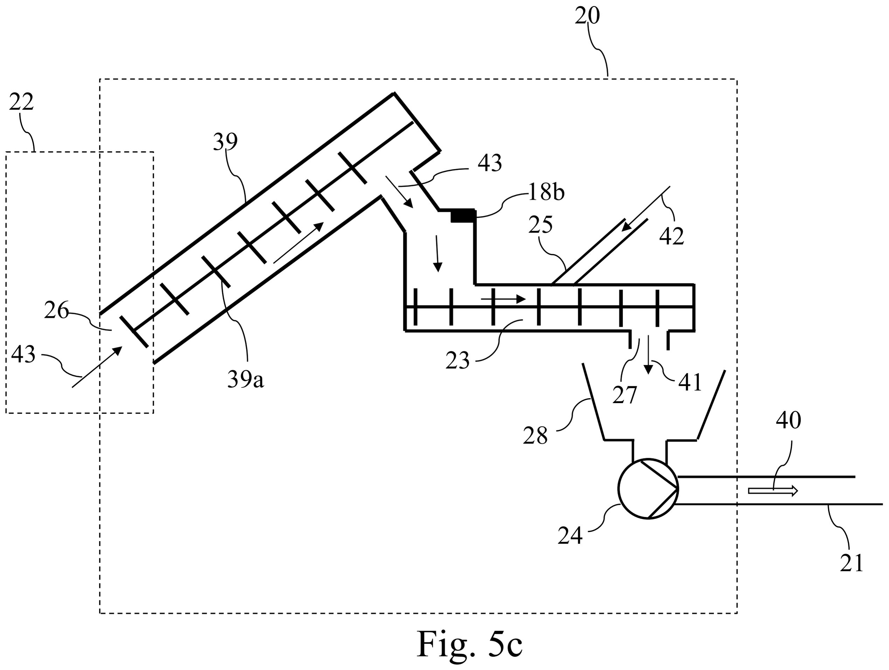

Referring to Fig.5a, Fig.5b, and Fig.5c three examples of an embodiment of the second production unit 20 are shown.

The second production unit 20 comprises a mixing device 23 configured to form the binder 41 by mixing the one or more binder substances 43 with water 42, and a pump 24 configured to pump away the binder and create the flow of the binder through the second pipe.

The pump 24 is, for example, a screw pump.

The mixing device 23 is further provided with a first inlet 25 for receiving water 42 and a second inlet 26 for receiving one or more binder substances 43. The mixing device 23 also has an outlet 27 that can generally be open or closed.

In embodiments, the mixing device 23 may comprise rotatable paddles or blades to stir the lime-water mixture to obtain a homogeneous mixture.

In embodiments, as shown in Fig.5b and Fig.5c, the second production unit 20 comprises a binder collection basin 28 placed between the mixing device 23 and the pump 24 to collect the binder produced by the mixing device 23. The pump 24 then pumps the binder from the binder collection basin 28 to the second outlet pipe 21. By providing the collection basin 28 for the produced binder, a new amount of binder can be produced in the mixing device 23 while the binder in the collection basin 28 is being pumped away.

For the embodiment shown on Fig.5c, a binder dosing device 39 is provided for dosing an amount of binder supplied to the mixing device. In the example shown, the binder dosing device 39 comprises a binder auger screw 39a configured to transport binder from the binder substance inlet 26 towards the mixing device 23. The binder substance inlet 26 is coupled with the second container 22 for receiving the binder substance 43. In Fig.5c, arrows 43 indicate the flow of the binder substance through the binder dosing device 39 towards the mixing device 23. After, the mixing of the binder with water the binder is formed and the binder 41 falls by gravity in the binder collection basin 28.

The water supply system is configured to add the exact amount of water needed to mix with an amount of lime. In embodiments, the first inlet 25 may have a control valve or faucet to regulate the water supply to the mixing device 23.

The second inlet 26 for the one or more binder substances may also comprise a dosing element to determine the correct amount of binder substances supplied to the mixing device 23. In embodiments, a level sensor 18b, schematically shown on Fig.5c, may be provided to measure a level of binder substance 43 within the mixing device 23 to ensure that there is always sufficient binder substance 43 supplied to the mixing device 23. For example, if the level sensor 18b indicates that the mixing device 23 is full with binder substance, the auger screw 39a that supplies the binder substance to the mixing device, may be stopped rotating and be reactivated when the level drops below a predefined value.

As mentioned above and shown in Fig.5b, the mobile device 1 may optionally comprise a boiler 29 to heat the water 42 supplied to the mixing device 23.

In embodiments, the second production unit is configured to generate a flow rate of binder in the second pipe of 70 liters/hour or more, preferably 350 liters/hour or more, more preferably 700 liters/hour or more.

### Control system

In embodiments, the control system 5 is configured to monitor the flow rate of the plant-based material flowing through the first pipe and the flow rate of the binder flowing through the second pipe so that a predetermined ratio between plant-based material and binder is maintained during the projection of the insulation material. In this way, an efficient and consistent projection of the insulation material, such as the hemp-lime mixture, is obtained.

The measurement of the flow rate through the first and second pipe can either be directly measured with flow sensors or the flow rate can be indirectly monitored. The flow rate in the second outlet pipe can, for example, be indirectly monitored by monitoring the pressure in the second outlet pipe with a pressure sensor. The flow rate in the first outlet pipe can be indirectly monitored by using sensors that ensure that there is always a minimum amount of plant-based material present in the first production unit.

The control system comprises, for example, a programmable logic controller (PLC) for managing the operation of the first and second production units.

The control system can thus also comprise various sensors to obtain information from the first and second production unit. For example, the control system comprises one or more sensors placed in the first production unit to measure the flow rate of the flow of the plant-based material through the first outlet pipe and/or to measure an amount of plant-based material available in the first production unit. The control system can also comprise one or more sensors placed in the second production unit to, for example, measure the flow rate of the flow of the binder in the second outlet pipe and/or the pressure in the second outlet pipe.

The control system can comprise a first feedback loop to adjust a dosing by the dosing element 13, for example, a rotation speed of an auger screw, of the first production unit and/or a second feedback loop to adjust a rotation speed of the pump 24 of the second production unit, such that a predetermined ratio between the plant-based material and the binder is maintained.

In embodiments, the control system further comprises a wireless user interface that allows an operator of the system 100 to generate a start signal to start the system 100 and a stop signal to stop the system.

The control system further comprises a computer-readable storage medium that comprises a computer program and a processor to execute the computer program.

In embodiments, the computer program comprises a set of instructions, which when executed, allow the mixing device of the second production unit to operate in a batch mode wherein the binder is produced in successive production batches and wherein for each production batch at least the following steps are performed: supplying a predetermined amount of water and supplying a predetermined amount of the one or more binder substances to the mixing device, operating the mixing device to mix the water with the one or more binder substances, pumping away the formed binder.

In embodiments, a first production batch to produce binder is started after the operator has generated the start signal using the wireless user interface. Subsequently or in parallel, the transport system 15 in the first container 12 is also started to fill the collection basin 17 with plant-based material.

In embodiments, the control system comprises a level sensor 18a configured to measure a level of plant-based material in the collection basin 17 of the first production unit 10. To ensure a constant flow rate of plant-based material through the first outlet pipe, it is important that the collection basin 17 always remains full, and thus a continuous supply of plant-based material from the first container via the transport system 15 is maintained. If the level of plant-based material in the collection basin 17 falls below a predetermined level, the mobile device 1 is stopped, and stopping the mobile device comprises at least stopping the pump of the second production unit and stopping the blower of the first production unit.

In embodiments, the control system may further comprises a level sensor 18b configured to measure a level of binder substance 43 within the mixing device 23 to ensure that there is always sufficient binder substance 43 supplied to the mixing device 23. For example the rotation of the auger screw 39a of the binder dosing device may be controlled using the level sensor 18b. For example, if the level sensor 18b indicates that the mixing device 23 is full with binder substance, the auger screw 39a may be stopped rotating and be reactivated when the level drops below a predefined value.

The present disclosure is described in terms of specific embodiments that are illustrative of the disclosure and should not be construed as limiting. It will be appreciated by those skilled in the art that the present disclosure is not limited to what is specifically shown and/or described and that alternative or modified embodiments can be developed in light of the general teaching of this disclosure. The described drawings are merely schematic and non-limiting.

For clarity and concise description, elements are described herein as part of the same or separate embodiments, however, it will be clear that the scope of the invention may comprise embodiments with combinations of all or some of the described elements. It should be understood that the shown embodiments have the same or similar elements, except where they are described as being different.

Use of the verb "comprise" as well as the respective conjugations does not exclude the presence of other elements than those mentioned. Use of the article "a" or "the" preceding an element does not exclude the presence of a plurality of such elements.

Moreover, the terms first, second, and the like in the description and in the claims are used for distinguishing between similar elements and not necessarily for describing a sequence, whether in time, space, ranking, or in any other manner. It is to be understood that the terms so used are interchangeable under appropriate circumstances and that the embodiments of the disclosure described herein are capable of operation in other sequences than described or illustrated herein.

Reference throughout the specification to "one embodiment" or "an embodiment" means that a particular feature, structure, or characteristic described in connection with the embodiments is comprised in one or more embodiments of the present disclosure.

When in this specification it is referred to "one embodiment" or "an embodiment", it means that a particular feature, structure, or characteristic described in connection with the embodiments is comprised in one or more embodiments of this disclosure. Thus, appearances of the phrases "in one embodiment" or "in an embodiment" in various places in this specification are not necessarily all referring to the same embodiment, but could be.

### Clauses

According to the present invention discussed above, a number of clauses can be defined as outlined below, wherein the clauses comprise characterizations indicating a variety of options, features, and feature combinations that can be used in accord with the teachings of the present disclosure as discussed above. The following clauses could for instance be claimed:
1. A mobile device 1 for producing an insulation material that comprises a mixture of a plant-based material and a binder, the mobile device comprising:
   - a first container 12 for storing a plant-based material, comprising a bottom side 12e, two longitudinal sides 12a,12b extending along a longitudinal axis L, and a first 12c and second 12d lateral side transverse to the longitudinal sides,
   - a second container 22 for storing one or more binder substances,
   - a first 11 and a second 21 outlet pipe,
   - a first production unit 10 connected to the first container to receive plant-based material and configured to create a flow of the plant-based material 30 through the first outlet pipe 11,
   - a second production unit 20 connected to the second container to receive the one or more binder substances, and wherein the second production unit is configured to produce a binder 40 by mixing the one or more binder substances with water and to create a flow of the binder 40 through the second outlet pipe 21,
   - a frame 2 extending along the longitudinal axis L, and wherein at least the first container, the second container, the first production unit, and the second production unit are supported by the frame, and
   - at least two wheels 3 and a suspension system that connects the at least two wheels to the frame,

   and wherein a wall opening 19 is located in the first or second lateral side of the first container, and wherein the wall opening is connected to the first production unit 10 for feeding the plant-based material to the first production unit 10 through said wall opening 19,
   and wherein the first container 12 comprises a transport system 15 configured to transport the plant-based material in the first container to said wall opening 19.
2. The mobile device according to clause 1 wherein the first container has a capacity equal to or greater than 5 m³, preferably equal to or greater than 10 m³, more preferably equal to or greater than 50 m³.
3. The mobile device according to clause 1 or clause 2 wherein the second container has a capacity equal to or greater than 0.5 m³, preferably equal to or greater than 1 m³, more preferably equal to or greater than 5 m³.
4. The mobile device according to any of previous clauses wherein the transport system 15 comprises a conveyor belt or a conveyer screw.
5. The mobile device according to clause 4 wherein said conveyor belt or said conveyer screw is located on the bottom side 12e of the first container 12.
6. The mobile device according to clause 4 or 5 wherein the conveyor belt or the conveyer screw extends along the longitudinal axis (L).
6. The mobile device according to any of previous clauses wherein the longitudinal axis L is oriented from a front side to a back side of the mobile device.
7. The mobile device according to any of previous clauses wherein the bottom side 12e of the first container is resting on the frame.
8. The mobile device according to any of previous clauses wherein the lateral side of the first container that is comprising the wall opening 19 is located at a back side of the mobile device.
9. The mobile device according to any of previous clauses wherein at least a bottom portion of the first container has a conical shape.
10. The mobile device according to any of clauses 1 to 8, wherein the first container 12 has a shape of a cuboid, preferably wherein 0.6 x *W_{C}* ≤ *W_{B}* ≤ *W_{C},* preferably 0.7 x *W_{C}* ≤ *W_{B}* /≤ *W_{C},* more preferably 0.8 x *W_{C}* ≤ *W_{B}* /≤ *W_{C}* with *W_{B}* corresponding to a width of the conveyer belt 15a and *W_{C}* corresponding to a width of the first container.
11. The mobile device according to any of previous clauses wherein the first container 12 comprises an anti-bridging system configured for limiting bridge formation in the first container when the mobile device is in operation and the first container is filled with the plant-based material.
12. The mobile device according to any of previous clauses wherein the first container 12 comprises scraping elements or paddles 38a, 38b configured for limiting bridge formation in the first container.
10. The mobile device according to any of the preceding clauses wherein the first production unit 10 further comprises: a dosing element 13 to dose the supply of plant-based material from the first container 12 to the first outlet pipe 11, and a blower 14 configured to blow air through the first outlet pipe 11 to thereby create the flow of plant-based material through the first outlet pipe.
11. The mobile device according to clause 10 wherein the first production unit comprises a collection basin 17 to collect the plant-based material delivered from the first container 12 through said wall opening 19, and wherein the dosing element 13 is placed between the collection basin 17 and the first outlet pipe 11.
12. The mobile device according to 10 or 11 wherein the first production unit further comprises a gate 16, placed between the dosing element 13 and the first outlet pipe 11, and wherein the gate 16 is configured to prevent air from the blower 14 from entering the dosing element 13.
13. The mobile device according to any of clauses 10 to 12 wherein the dosing element 13 comprises an auger screw 13a, preferably wherein the auger screw of the dosing element is configured to transport plant-based material from the collection basin 17 towards the gate 16.
14. The mobile device according to any of the preceding clauses wherein the first production unit 10 is configured to generate a flow rate of plant-based material of 1 m³/hour or more, preferably 5 m³/hour or more, more preferably 10 m³/hour or more, through the first outlet pipe 11.
15. The mobile device according to any of the preceding clauses wherein the second production unit 20 at least comprises: a mixing device 23 configured to form the binder 41 by mixing the one or more binder substances 43 with water 42, and a pump 24 configured to pump away the formed binder 41 and create the flow of the binder 40 through the second pipe 21, preferably wherein the second production unit further comprises a binder dosing device 39 configured to dose the supply of binder substance and to transport binder substance from a binder substance inlet 26 towards the mixing device 23, more preferably wherein the second production unit further comprises a binder dosing device 39 configured to dose the supply of binder substance and to transport binder substance from a binder substance inlet 26 towards the mixing device 23, and a binder collection basin 28 placed between the mixing device 23 and the pump 24 to collect the binder produced by the mixing device 23.
16. The mobile device according to clause 15 wherein the mixing device 23 comprises a first inlet 25 for receiving water, a second inlet 27 for receiving the one or more binder substances 43, and a mixing device outlet 27 for discharging the formed binder.
17. The mobile device according to any of the preceding clauses wherein the second production unit 20 is configured to generate a flow rate of binder in the second pipe of 70 liters/hour or more, preferably 350 liters/hour or more, more preferably 700 liters/hour or more.
18. The mobile device according to any of the preceding clauses further comprising a generator to supply electricity to the first 10 and second 20 production unit, and wherein the generator is mounted on the frame 2.
19. The mobile device according to any of clauses 15 to 18 further comprising a boiler 29 to heat the water 42 supplied to the mixing device 23, preferably wherein the boiler is configured to heat the water by heat recovery from the generator.
20. The mobile device according to any of previous clauses further comprising
   - a control system 5 to control the first and second production unit.
21. The mobile device according to clause 20, wherein the control system 5 is configured to operate the mixing device 23 of the second production unit in a batch mode wherein the binder is produced in successive production batches and wherein for each production batch at least the following steps are performed: supplying a predetermined amount of water and supplying a predetermined amount of the one or more binder substances to the mixing device 23, operating the mixing device 23 to mix the water with the one or more binder substances, and pumping away the formed binder with the pump 24.
22. The mobile device according to clause 20 or 21 wherein the control system 5 is configured to monitor the flow rate of the plant-based material 31 flowing through the first outlet pipe 11 and the flow rate of the binder 41 flowing through the second outlet pipe 21, so that a predetermined ratio between plant-based material and binder is maintained during the projection of the insulation material.
23. The mobile device according to any of the preceding clauses wherein the plant-based material comprises a woody component of a plant, preferably wherein the plant-based material are hemp shives.
24. The mobile device according to any of the preceding clauses wherein one of the one or more binder substances comprises lime, clay, or cement, or a combination thereof.
25. The mobile device according to any of previous clauses further comprising an air compressor mounted on the frame and a third outlet pipe for supplying compressed air.
26. The mobile device according to any of the preceding clauses, further comprising a coupling element 4 attached to a front side of the frame 2 and configured to attach the mobile device 1 to a towing vehicle 70 so that the mobile device can be transported.
27. A trailer 65 comprising a mobile device according to any of the preceding clauses, wherein said frame 2, the at least two wheels 3, and the suspension system are part of a chassis of the trailer.
28. A truck 60 comprising a mobile device according to any of clauses 1 to 25 and wherein said frame 2, the at least two wheels 3, and the suspension system are part of a chassis of the truck.
29. A system 100 for producing and projecting an insulation material that comprises a mixture of a plant-based material and a binder, the system comprising:
   - a mobile device 1 according to any of clauses 1 to 26,
   - a projection lance 50 connectable to the mobile device and configured for mixing the flow 30 of the plant-based material with the flow 40 of the binder and for projecting the mixed flows of plant-based material and binder.
30. The system according to clause 29, wherein the projection lance 50 comprises a nozzle 55 that has a first inlet 56 and a second inlet 57 which can be connected to the first outlet pipe 11 and the second outlet pipe 21 respectively, so that the nozzle receives both the flow of the plant-based material and the flow of the binder.
31. The system according to clause 30 wherein the projection lance 50 comprises a first flexible hose 51 for connecting the first outlet pipe 11 to the first inlet of the nozzle 56 and a second flexible hose 52 for connecting the second outlet pipe 21 to the second inlet of the nozzle 57.
32. The system according to clause 31 wherein the nozzle of the projection lance has a third inlet which can be connected to the third outlet pipe.
33. The system according to clause 32 wherein the projection lance 50 comprises a third flexible hose for connecting the third outlet pipe supplying compressed air to the third inlet of the nozzle 56 so that compressed air can flow through the nozzle together with the mixed flow of plant-based material and binder.
34. The system according to any of the preceding clauses 29-33, wherein the first and second production unit are configured to project a flow rate of insulation material of 1 m³/hour or more, preferably 5 m³/hour or more, more preferably 10 m³/hour or more.

### List of reference signs

| | |
|---|---|
| 1 | Mobile device |
| 2 | frame |
| 3 | wheel |
| 4 | coupling element |
| 5 | control system |
| 10 | First production unit |
| 11 | First pipe |
| 12 | First container |
| 12a,12b | Longitudinal sides of first container |
| 12c, 12d | Lateral sides of first container |
| 12e | Bottom side of first container |
| 12f | Top of first container |
| 13 | dosing element |
| 13a | Auger screw of dosing element |
| 14 | blower |
| 15 | transport system |
| 15a | conveyer belt |
| 16 | gate |
| 17 | collection basin |
| 18a | Level sensor of first production unit |
| 18b | Level sensor of second production unit |
| 19 | wall opening |
| 20 | Second production unit |
| 21 | Second pipe |
| 22 | Second container |
| 23 | mixing device |
| 24 | pump |
| 25 | Water inlet |
| 26 | Binder substances inlet |
| 27 | Mixing device outlet |
| 28 | binder collection basin |
| 29 | boiler |
| 30 | Flow of plant-based material |
| 31 | Plant-based material |
| 35 | airflow |
| 38 | Anti-bridging system |
| 38a, 38b | Scraping element or paddle |
| 39 | Binder dosing device |
| 39a | Auger screw of binder dosing element |
| 40 | Flow of binder |
| 41 | binder |
| 42 | water |
| 43 | binder substance |
| 50 | projection lance |
| 51 | First flexible hose |
| 52 | Second flexible hose |
| 55 | nozzle |
| 56 | First nozzle inlet |
| 57 | Second nozzle inlet |
| 60 | truck |
| 65 | trailer |
| 70 | towing vehicle |
| 100 | projection system |

## Claims

1. A mobile device (1) for producing an insulation material that comprises a mixture of a plant-based material and a binder, the mobile device comprising:
- a first container (12) for storing a plant-based material, comprising a bottom side (12e), two longitudinal sides (12a,12b) extending along a longitudinal axis (L), and a first (12c) and second (12d) lateral side transverse to the longitudinal sides,
- a second container (22) for storing one or more binder substances,
- a first production unit (10) connected to the first container to receive plant-based material and configured to create a flow of the plant-based material (30) through a first outlet pipe (11) of the mobile device,
- a second production unit (20) connected to the second container to receive the one or more binder substances, and wherein the second production unit is configured to produce a binder (40) by mixing the one or more binder substances with water and to create a flow of the binder (40) through a second outlet pipe (21) of the mobile device,
- a frame (2) extending along the longitudinal axis (L), and wherein at least the first container, the second container, the first production unit, and the second production unit are supported by the frame, and
- at least two wheels (3) and a suspension system that connects the at least two wheels to the frame,
and wherein a wall opening (19) is located in the first or second lateral side of the first container, and wherein the wall opening is connected to the first production unit (10) for feeding the plant-based material to the first production unit (10) through said wall opening (19),
and wherein the first container (12) comprises a transport system (15) configured to transport the plant-based material in the first container to said wall opening (19).

2. The mobile device according to claim 1 wherein the first container has a capacity equal to or greater than 5 m³, preferably equal to or greater than 10 m³, more preferably equal to or greater than 50 m³, and/or wherein the second container has a capacity equal to or greater than 0.5 m³, preferably equal to or greater than 1 m³, more preferably equal to or greater than 5 m³.

3. The mobile device according to any of previous claims wherein the transport system (15) comprises a conveyor belt (15a) or a conveyer screw, preferably wherein said conveyor belt or said conveyer screw is located on the bottom side (12e) of the first container (12).

4. The mobile device according to any of previous claims wherein the lateral side of the first container that is comprising said wall opening (19) is located at a back side of the mobile device.

5. The mobile device according to any of previous claims wherein the first container (12) comprises an anti-bridging system configured for limiting bridge formation in the first container when the mobile device is in operation and the first container is filled with the plant-based material, preferably wherein the anti-bridging system comprises any of or a combination of: rotatable scraping elements, rotatable paddles (38a, 38b) or one or more vibration devices.

6. The mobile device according to any of previous claims wherein the first production unit (10) comprises: a dosing element (13) to dose the supply of plant-based material from the first container (12) to the first outlet pipe (11), a blower (14) configured to blow air through the first outlet pipe (11) to thereby create the flow of plant-based material through the first outlet pipe, and a gate (16), placed between the dosing element (13) and the first outlet pipe (11), and wherein the gate (16) is configured to prevent air from the blower (14) from entering the dosing element (13), preferably wherein the first production unit (10) is configured to generate a flow rate of plant-based material of 1 m³/hour or more, preferably 5 m³/hour or more, more preferably 10 m³/hour or more, through the first outlet pipe (11).

7. The mobile device according to claim 6 wherein the first production unit comprises a collection basin (17) configured to collect the plant-based material delivered from the first container (12) through said wall opening (19), preferably wherein the dosing element (13) comprises an auger screw configured to transport the plant-based material from the collection basin (17) towards the gate (16).

8. The mobile device according to any of previous claims wherein the second production unit (20) at least comprises: a mixing device (23) configured to form the binder (41) by mixing the one or more binder substances (43) with water (42), and a pump (24) configured to pump away the formed binder (41) and create the flow of the binder (40) through the second pipe (21), preferably wherein the second production unit (20) is configured to generate a flow rate of binder in the second pipe of 70 liters/hour or more, preferably 350 liters/hour or more, more preferably 700 liters/hour or more.

9. The mobile device according to any of previous claims further comprising
- a control system (5) to control the first and second production unit, preferably wherein the control system (5) is configured to monitor the flow rate of the plant-based material (31) flowing through the first outlet pipe (11) and the flow rate of the binder (41) flowing through the second outlet pipe (21), so that a predetermined ratio between plant-based material and binder is maintained during the projection of the insulation material.

10. The mobile device according to any of previous claims further comprising an air compressor mounted on the frame and a third outlet pipe for supplying compressed air.

11. A trailer (65) comprising a mobile device according to any of the preceding claims, wherein said frame (2), the at least two wheels (3), and the suspension system are part of a chassis of the trailer.

12. A truck (60) comprising a mobile device according to any of claims 1 to 10 and wherein said frame (2), the at least two wheels (3), and the suspension system are part of a chassis of the truck.

13. A system (100) for producing and projecting an insulation material that comprises a mixture of a plant-based material and a binder, the system comprising:
- a mobile device (1) according to any of claims 1 to 10,
- a projection lance (50) connectable to the mobile device and configured for mixing the flow (30) of the plant-based material with the flow (40) of the binder and for projecting the mixed flows of plant-based material and binder, wherein the projection lance (50) comprises a nozzle (55) that has a first inlet (56) and a second inlet (57) which can be respectively connected to the first outlet pipe (11) and the second outlet pipe (21) of the mobile device, so that the nozzle receives both the flow of the plant-based material and the flow of the binder, preferably wherein the nozzle of the projection lance has a third inlet which can be connected to the third outlet pipe of the mobile device supplying compressed air.

14. The system according to claim 13 wherein the projection lance (50) comprises a first flexible hose (51) for connecting the first outlet pipe (11) to the first inlet of the nozzle (56) and a second flexible hose (52) for connecting the second outlet pipe (21) to the second inlet of the nozzle (57), preferably wherein the projection lance (50) comprises a third flexible hose for connecting the third outlet pipe supplying compressed air to the third inlet of the nozzle (56) so that compressed air can flow through the nozzle together with the mixed flow of plant-based material and binder.

15. The system according to claim 13 or 14, wherein the first and second production unit are configured to project a flow rate of insulation material of 1 m³/hour or more, preferably 5 m³/hour or more, more preferably 10 m³/hour or more.
